# EUROPEAN PATENT APPLICATION

(11) **EP 1 460 625 A1**
(43) Date of publication of application: **22.09.2004**
(21) Application number: 02783724.4
(22) Date of filing: 29.11.2002
(51) Int. Cl.: G11B 7/26

(54) **INFORMATION MEDIUM MASTER MANUFACTURING METHOD, INFORMATION MEDIUM STAMPER MANUFACTURING METHOD, INFORMATION MEDIUM MASTER MANUFACTURING APPARATUS, AND INFORMATION MEDIUM STAMPER MANUFACTURING APPARATUS**

(30) Priority: 30.11.2001 JP 2001365612
(71) Applicant: TDK Corporation, Chuo-ku, Tokyo 103-8272 (JP)
(72) Inventor: TAKAHATA, Hiroaki, c/o TDK Corporation, Tokyo 103-8272 (JP); OYAKE, Hisaji, c/o TDK Corporation, Tokyo 103-8272 (JP)
(74) Representative: HOFFMANN - EITLE
(86) International application number: PCT/JP2002/012569
(87) International publication number: WO 2003/046904

(57) **Abstract**

An information medium master manufacturing method forms a latent image by emitting an exposing beam onto a photoresist layer (13) formed on a light absorbing layer (12), then develops the latent image to expose a part of the light absorbing layer (12) from the photoresist layer (13), dry etches the light absorbing layer (12) using the photoresist layer (13) as a mask to form concave parts (2) in the light absorbing layer (12), and removes the remaining photoresist layer (13) from the light absorbing layer (12) to manufacture a master (1) in which a protrusion/depression pattern is formed. The light absorbing layer (12) is formed of a resin material such that the selection ratio of the etching rate of the photoresist layer (13) to the etching rate of the light absorbing layer (12) is 0.5 or above during the dry etching. By doing so, it is possible to ensure that the photoresist layer (13) used a as mask remains even when the formation of concave parts (2) of a desired depth is completed, so that problems such as rounding or shallow formation of the groove shapes of the concave parts (2) can be avoided and it is possible to manufacture an information medium master with a sharp protrusion/depression pattern.

## Description

### TECHNICAL FIELD

The present invention relates to an information medium master manufacturing method and manufacturing apparatus that form a protrusion/depression pattern by dry etching, and to an information medium stamper manufacturing method and manufacturing apparatus that manufacture an information medium stamper using this information medium master.

### BACKGROUND ART

When manufacturing an optical recording medium (such as a CD or a DVD) as an information medium, first an optical recording medium stamper (hereinafter also referred to as the "stamper"), in which is formed a protrusion/depression pattern for transferring guide grooves for tracking control, pits, and the like to a disc base for the optical recording medium, is manufactured. When manufacturing this stamper, first an optical recording medium master (hereinafter also referred to as the "master") with approximately the same protrusion/depression pattern as the disc base is fabricated, and then the protrusion/depression pattern of the manufactured master is transferred to a stamper forming material. In this case, a manufacturing method for a master (photoresist master) that forms a photoresist layer on a base used as a support member irradiates the photoresist layer with an exposing beam to form a latent image, and then develops the latent image to form a protrusion/depression pattern in the thickness of the photoresist layer is conventionally known as a manufacturing method for a master. On the other hand, in response to demands for increased density for optical recording media, various manufacturing methods for masters are being developed to reduce the formation pitch of the guide grooves and the size of the pits.

For example, in Japanese Laid-Open Patent Publication No. H10-241213, a manufacturing method that manufactures a glass master (20, the "optical recording medium master" mentioned above) in which a protrusion/depression pattern is formed by forming concave parts in a glass base (10, a member corresponding to the base mentioned above) by dry etching, and a manufacturing method that manufactures a metal stamper (15, the "optical recording medium stamper" mentioned above) using a glass master, are disclosed. In this manufacturing method, first a photoresist (11) is applied onto the glass base, the photoresist is then irradiated with an exposing beam and a protrusion/depression pattern is recorded by exposure. After this, the photoresist is developed to expose parts (the exposed/recorded parts) of the surface of the glass base. Next, by dry etching the glass base with the photoresist as a mask, concave parts are formed in the glass base. Next, the photoresist remaining on the glass base is removed. By doing so, a glass master in which a protrusion/depression pattern is formed is manufactured. Next, a conductive film (13) is formed on the surface of the manufactured glass master and plating with a metal material is carried out with the conductive film as an electrode. By doing so, a metal stamper is formed on the glass master. After this, the metal stamper is separated from the glass master, and by transferring the protrusion/depression pattern of the metal stamper to a resin material, for example, a disc base is formed.

On the other hand, Japanese Laid-Open Patent Publication No. 2000-40267 discloses a manufacturing method for a master in which a protrusion/depression pattern is formed by dry etching a lower layer (2) formed on the surface of a glass base (1) and a manufacturing method for a optical disc stamper(6) using this master. According to this manufacturing method, first the lower layer is formed by sputtering Cr on the surface of the glass base. After this, a photoresist is spin coated on this lower layer to form a thin film (3), this thin film is irradiated with an exposing beam, a protrusion/depression pattern is recorded by exposure, and then developing is carried out. After this, dry etching is carried out using the photoresist on the lower film as a mask, thereby forming concave parts in the lower film. Next, the photoresist remaining on the lower film is removed. By doing so, a master (a master with a multilayer structure composed of the glass base and the lower level) in which a protrusion/depression pattern is formed is manufactured. After this, a metal material layer is formed by carrying out Ni sputtering or electroplating on the surface of the manufactured master. By doing so, an optical disc stamper composed of a metal material is formed on a master. After this, the optical disc stamper is separated from the master, and by transferring the protrusion/depression pattern of the optical disc stamper to a resin material, for example, a disc base is formed.

### DISCLOSURE OF THE INVENTION

By investigating the conventional methods of manufacturing an information medium master described above, the present inventor discovered the following problem. That is, in the manufacturing method disclosed in Japanese Laid-Open Patent Publication No. H10-241213, the protrusion/depression pattern is formed by forming concave parts in a glass base (synthetic silica base) by dry etching. In this case, it is known that the etching rate (the thickness that can be etched in a predetermined time when an etching beam of a predetermined power is used) is normally low for a synthetic silica base. This means that a relatively long time is required by the dry etching for forming concave parts of a desired depth, so that there is the problem of difficulty in reducing the manufacturing cost of a glass master (an information medium master). A photoresist normally has a high etching rate compared to a synthetic silica base, and therefore disappears before the synthetic silica base has been etched to the desired depth. This means that it is necessary to form the photoresist with a certain thickness or greater. In this case, when the photoresist has been formed with a sufficient thickness, a large amount of photoresist material is consumed, so that it is difficult to reduce the manufacturing cost of a glass master.

On the other hand, according to the manufacturing method disclosed in Japanese Laid-Open Patent Publication No. 2000-40267, the protrusion/depression pattern is formed by dry etching the lower layer produced by sputtering Cr on the surface of a glass base to form concave parts. According to this manufacturing method, Cr that is softer than a synthetic silica base is etched, so that it is possible to form the concave parts in a shorter time than the above manufacturing method that forms concave parts in a synthetic silica base. However, an expensive large-scale vacuum coating apparatus is required to sputter Cr, so that there is the problem of how to reduce the manufacturing cost of an information medium master. Also, in order to dry etch the lower layer made of Cr, it is necessary to use a chlorine-based etching gas. However, as chlorine-based etching gases are poisonous, extreme care is required during handling. Due to such handling of the etching gas, there is the problem of the etching process becoming complex. Additionally, since a chlorine-based etching gas is used, although the lower layer formed of Cr can be easily etched, the photoresist used as a mask is also etched in a relatively short time. This means that it is necessary to apply the photoresist used as a mask with sufficient thickness for the photoresist to remain for the time required to form concave parts of the desired depth in the lower layer. In the above application, a rebaking process for increasing the strength of the photoresist after developing is disclosed. Since no detailed description is given in the above application, it is unclear whether it is possible to lower the etching rate of the photoresist by carrying out this rebaking process. However, even if it were supposed that it were possible to solve the above problem of the photoresist being etched in a relatively short time by carrying out a rebaking process, the number of unnecessary manufacturing processes would still be increased by an amount corresponding to the rebaking process, so that there would still be the problem of the difficulty in reducing the manufacturing cost of the information medium master.

In addition, according to the manufacturing methods described in both the applications mentioned above, when the photoresist is exposed to record a latent image, the exposing beam is reflected at the interface between the photoresist and the glass master (or the lower layer), and such reflected light can cause multiple exposure of the photoresist which ruins the latent image. In such cases, the concave parts (latent image) are formed shallowly and/or with a groove shape that is rounded, so that there is the problem that it is difficult to obtain a sharp protrusion/depression pattern during the subsequent dry etching. Also, since the protrusion/depression pattern of an information medium stamper formed using this master will also be rounded, there is the problem that it is difficult to manufacture disc bases for which proper tracking can be carried out.

The present invention was conceived to solve the problems described above, and it is a principal object of the present invention to provide a manufacturing method and a manufacturing apparatus that can manufacture an information medium master and an information medium stamper in which a sharp protrusion/depression pattern is formed without incurring a high manufacturing cost, as well as a manufacturing method and a manufacturing apparatus that can manufacture an information medium stamper.

An information medium master manufacturing method according to the present invention manufactures an information medium master in which a protrusion/depression pattern is formed by forming a photoresist layer above an etched body, irradiating the photoresist layer with an exposing beam to form a latent image, then developing the photoresist layer to expose part of the etched body from the photoresist layer, forming concave parts in the etched body by dry etching the etched body with the photoresist layer as a mask, and removing the photoresist layer remaining above the etched body, wherein an etched body formed of a resin material such that a selection ratio of an etching rate of the photoresist layer to an etching rate of the etched body is 0.5 or above is used as the etched body. It should be noted that the "selection ratio of the etching rate of the photoresist layer to the etching rate of the etched body" for the present invention is a value produced by dividing the etching rate of the etched body by the etching rate of the photoresist layer.

Also, an information medium master manufacturing apparatus according to the present invention manufactures an information medium master in which a protrusion/depression pattern is formed and includes: a resist layer forming device that forms a photoresist layer above an etched body; an exposing device that emits an exposing beam onto the photoresist layer to form a latent image; a developing device that exposes part of the etched body by developing the photoresist layer in which the latent image is formed; an etching device that carries out dry etching on the etched body using the developed photoresist layer as a mask to form concave parts in the etched body; and a resist removing device that removes the photoresist layer remaining on the etched body, wherein the resist layer forming device uses an etched body formed of a resin material as the etched body such that a selection ratio of an etching rate of the photoresist layer to an etching rate of the etched body is 0.5 or above.

According to this manufacturing method and manufacturing apparatus for an information medium master, by forming the etched body of a resin material such that a selection ratio of an etching rate of the photoresist layer to an etching rate of the etched body is 0.5 or above, it is possible for the photoresist layer as a mask to remain even when the formation of the concave parts of the desired depth has been completed. This means that it is possible to effectively avoid problems such as rounding of groove shapes of the concave parts or formation thereof with a reduced depth due to the photoresist layer disappearing before the formation of the concave parts has been completed. Accordingly, by using this information medium master to manufacture an information medium stamper, it is possible to form an information medium stamper that can manufacture disc bases for which proper tracking is possible. Also, compared to the conventional method that uses an etched body formed by sputtering Cr, the etched body can be formed easily using a resin material, so that a considerable reduction can be made in the manufacturing cost of the information medium master.

In this case, in the information medium master manufacturing method according to the present invention, an etched body formed of a resin material such that the selection ratio is 1.0 to 3.0, inclusive is preferably used as the etched body. Also, with the information medium master manufacturing apparatus according to the present invention, an etched body formed of a resin material such that the selection ratio is 1.0 to 3.0, inclusive is preferably used as the etched body. By doing so, it is possible for the photoresist layer as a mask to remain more reliably even when the formation of the concave parts of the desired depth has been completed, so that it is possible to more effectively avoid problems such as rounding of groove shapes of the concave parts or formation thereof with a reduced depth due to the photoresist layer as a mask disappearing before the formation of the concave parts has been completed.

Also, in the information medium master manufacturing method according to the present invention, an etched body formed of a resin including a beam absorbing material that absorbs the exposing beam or a beam reflection preventing material that prevents reflection of the exposing beam is preferably used as the etched body. Also, in the information medium master manufacturing apparatus according to the present invention, the resist layer forming device preferably uses an etched body formed of a resin including a beam absorbing material that absorbs the exposing beam or a beam reflection preventing material that prevents reflection of the exposing beam as the etched body. By doing so, it is possible to effectively prevent multiple exposure of the photoresist layer, and as a result it is possible to form a sharp latent image (concave parts) with a narrow pitch. Accordingly, by manufacturing a disc base with a stamper manufactured using this information medium master as a base, it is possible to considerably increase the recording density of data.

Additionally, in the information medium master manufacturing method according to the present invention, the resin material is preferably a mixture including a melanine resin and 4,4'-bis (diethylamino) benzophenone as the beam absorbing material. Also, in the information medium master manufacturing apparatus according to the present invention, the resist layer forming device preferably uses an etched body formed of a mixture, which includes a melanine resin and 4,4'-bis (diethylamino) benzophenone as the beam absorbing material, as the etched body. By doing so, during exposure of the photoresist layer, a majority of the laser beam that has passed through the photoresist layer (and formed the latent image) is absorbed by the light absorbing layer, and even if the laser beam has passed through without being absorbed and been reflected back, such laser beam is absorbed by the light absorbing layer without reaching the photoresist layer. This means that it is possible to effectively prevent multiple exposure of the photoresist layer, so that it is possible to form a sharp latent image (concave parts) with a narrow pitch in the photoresist layer. Accordingly, it is possible to sharply form the concave parts of the master by dry etching with the photoresist layer used as a mask.

Also, in the information medium master manufacturing method according to the present invention, the etched body is preferably formed in a layer above a base and the concave parts are formed in the etched body. In this case, the etched body is preferably formed by spin coating the resin material above the base. Also, the information medium master manufacturing apparatus according to the present invention should preferably include an etched body forming device that forms the etched body of the resin material in a layer above a base. In this case, it is preferable for the etched body forming device to form the etched body by spin coating the resin material above the base. By doing so, it is possible to form the etched body (light absorbing layer) with the desired thickness relatively easily. Also, unlike the conventional manufacturing method that has a lower layer made of Cr, for example, as an etched body, it is possible to dispense with an expensive large-scale vacuum coating apparatus and the like, so that the manufacturing cost of the master (the information medium master) can be considerably reduced. Also, unlike the case where Cr is used, it is not necessary to use a chlorine-based etching gas, so that the master can be manufactured safely and easily.

Additionally, in the information medium master manufacturing method according to the present invention, it is preferable that a base formed of a material with a lower etching rate than the etched body is used, that the etched body is formed with a thickness set at the depth of the concave parts to be formed, and that the protrusion/depression pattern is formed by forming the concave parts by exposing part of the base from the etched body during dry etching. Also, in an information medium master manufacturing apparatus according to the present invention, it is preferable that the etched body forming device uses a base formed of a material with a lower etching rate than the etched body as the base and forms the etched body with a thickness set at the depth of the concave parts to be formed, and that the etching device forms the protrusion/depression pattern by forming the concave parts by exposing part of the base from the etched body during dry etching. By doing so, the base is formed with a material (silica glass) with a lower etching rate than the light absorbing layer, the light absorbing layer is formed with a thickness that will become the depth of the formed concave parts, and during dry etching the concave parts are formed by exposing part of the base from the light absorbing layer, so that during etching, by merely etching until the surface of the base is exposed from the light absorbing layer, it is possible to easily form concave parts of the desired depth. In this case, even if the etching process is carried out slightly too long, the base with the low etching rate will not be significantly etched, so that it is possible to avoid the formation of concave parts that are excessively deeper than the desired depth, resulting in time management of the etching process becoming extremely easy.

An information medium stamper manufacturing method according to the present invention manufactures an information medium stamper using an information medium master manufactured according to the information medium master manufacturing method described above, the information medium stamper manufacturing method including steps of: forming a stamper forming material on a surface of the information medium master on which the protrusion/depression pattern is formed; and removing the etched body as the information medium master from the stamper forming material.

Also, an information medium stamper manufacturing apparatus according to the present invention manufactures an information medium stamper using an information medium master manufactured by the information medium master manufacturing apparatus described above, the information medium stamper manufacturing apparatus including: a stamper forming material forming device that forms a stamper forming material on a surface of the information medium master in which the protrusion/depression pattern is formed; and a removing device that removes the etched body as the information medium master from the stamper forming material.

An information medium stamper manufacturing method according to the present invention manufactures an information medium stamper using an information medium master manufactured according to the information medium master manufacturing method described above, the information medium stamper manufacturing method including steps of: forming a stamper forming material on a surface of the information medium master on which the protrusion/depression pattern is formed; and removing the etched body from the stamper forming material after separating the base from the information medium master.

Also, an information medium stamper manufacturing apparatus according to the present invention manufactures an information medium stamper using an information medium master manufactured by an information medium master manufacturing apparatus described above, the information medium stamper manufacturing apparatus including: a stamper forming material forming device that forms a stamper forming material on a surface of the information medium master in which the protrusion/depression pattern is formed; and a removing device that removes the etched body from a multilayer structure composed of the information medium master, from which the base has been separated, and the stamper forming material.

According to these manufacturing methods and manufacturing apparatuses for an information medium stamper, the protrusion/depression pattern of an information medium master is transferred to a stamper forming material to manufacture an information medium stamper, and since the protrusion/depression pattern of the information medium master is extremely sharp, the protrusion/depression pattern transferred to the information medium stamper can also be formed extremely sharply. Accordingly, by manufacturing a disc base for an information medium using this information medium stamper, it is possible to form a disc base for which proper tracking is possible.

Additionally, in an information medium stamper manufacturing method according to the present invention, the etched body is preferably removed by carrying out O₂ plasma ashing. By doing so, it is possible to reliably and easily remove the resin material stuck to the information medium stamper.

It is also preferable that the information medium stamper is manufactured by depositing a metal material as the stamper forming material on the information medium master. By doing so, compared to a manufacturing method that uses resin or the like as the stamper forming material, the protrusion/depression pattern of the master can be properly transferred.

Also, an information medium stamper manufacturing method according to the present invention manufactures a first stamper for transferring a protrusion/depression pattern onto an information medium by using an information medium stamper manufactured according to the information medium stamper manufacturing method described above as a master stamper and transferring the protrusion/depression pattern of the master stamper. By doing so, when mass producing a disc base for an information medium, it is possible to successively replace the information medium stamper in use with a new information medium stamper, so that disc bases with guide grooves with sharper groove shapes can be mass produced.

It should be noted that the disclosure of the present invention relates to a content of Japanese Patent Application 2001-365612 that was filed on 30 November 2001 and the entire content of which is herein incorporated by reference.

### BRIEF DESCRIPTION OF THE DRAWINGS

FIG. 1 is a cross-sectional view of a master 1 according to an embodiment of the present invention.

FIG. 2 is a cross-sectional view of a state where a light absorbing layer 12 has been formed on a base 11 in a manufacturing process of the master 1.

FIG. 3 is a cross-sectional view of a state where a photoresist layer 13 formed on the light absorbing layer 12 is irradiated with an exposing laser beam L in a manufacturing process of the master 1.

FIG. 4 is a cross-sectional view of a state where the developing of the photoresist layer 13 is complete in a manufacturing process of the master 1.

FIG. 5 is a cross-sectional view of a state where the etching of the light absorbing layer 12 is complete in a manufacturing process of the master 1.

FIG. 6 is a cross-sectional view of a stamper 20 according to an embodiment of the present invention.

FIG. 7 is a cross-sectional view of a state where an electroless nickel layer 21 has been formed on a master 1 in a manufacturing process of the stamper 20.

FIG. 8 is a cross-sectional view of a state where an electro nickel layer 22 has been formed on the electroless nickel layer 21 in a manufacturing process of the stamper 20.

FIG. 9 is a cross-sectional view of a state where the base 11 has been separated in a manufacturing process of the stamper 20.

FIG. 10 is a cross-sectional view of a state where a protrusion/depression pattern of the stamper 20 has been transferred to resin R2 in a manufacturing process of a disc base 30.

FIG. 11 is a cross-sectional view of the disc base 30 manufactured using the stamper 20.

FIG. 12 is a cross-sectional view of a case where the protrusion/depression pattern of the stamper 20 is transferred to a metal material to form a mother disc 40.

FIG. 13 is a cross-sectional view of a state where a protrusion/depression pattern of the mother disc 40 has been transferred to the resin R2 in a manufacturing process of the disc base 50.

FIG. 14 is a cross-sectional view of a base 1A according to another embodiment of the present invention.

FIG. 15 is a cross-sectional view of a state where the photoresist layer 13 formed on the light absorbing layer 12 is irradiated with the exposing laser beam L in a manufacturing process of the master 1A.

FIG. 16 is a cross-sectional view of a state where the developing of the photoresist layer 13 has been completed in a manufacturing process of the master 1A.

FIG. 17 is a block diagram showing the construction of a master manufacturing apparatus 100 and a stamper manufacturing apparatus 200.

### BEST MODE FOR CARRYING OUT THE INVENTION

Preferred embodiments of respective manufacturing methods and respective manufacturing apparatuses for an information medium master and an information medium stamper according to the present invention will now be described with reference to the attached drawings.

First, a master 1 corresponding to an optical recording medium master as an information medium master for the present invention will be described with reference to the drawings.

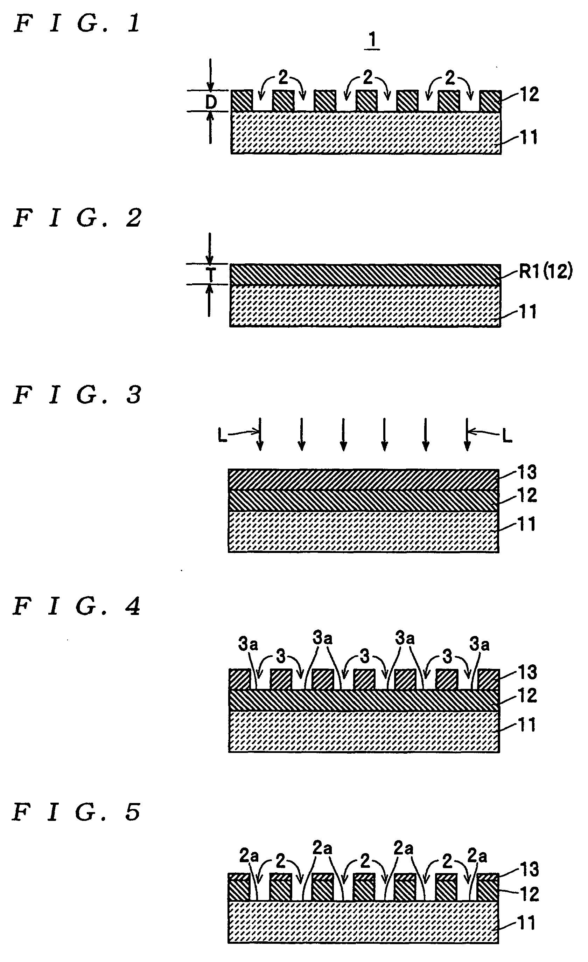

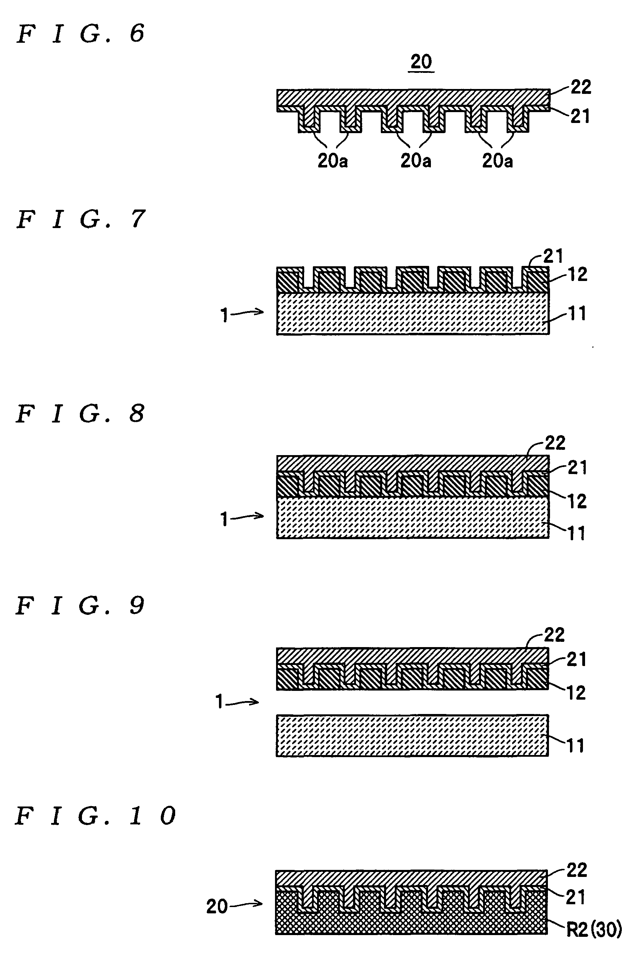

The master 1 shown in FIG. 1 is used as a mold for manufacturing a stamper 20 (see FIG. 6) and the like, and is constructed in the overall shape of a flat plate with a light absorbing layer 12 formed on a base 11. Concave parts 2, 2 ... that form a protrusion/depression pattern for the present invention are formed in spirals in the surface of the master 1. In this case, the concave parts 2, 2 ... have a formation pitch set in accordance with a pitch of guide grooves 30a (or concave parts for forming guide grooves) on a disc base 30 (or a mother disc 40) and a depth D set in accordance with a depth of the guide grooves 30a and the like.

The base 11 is a support member on which resin R1 (resin that forms the light absorbing layer 12, see FIG. 2) is applied as described later, and, as one example, is formed as a flat plate using silica glass with an etching rate of around 60nm/min. It should be noted that this etching rate is an example value for the etching conditions described below that can be preferably used for the present invention, with the same also applying to etching rate values given below.

### Etching Conditions

- Etching Gas:: CF₄, C₂F₆, C₃F₈, CHF₃
- Added Gas:: O₂, Ar, H₂
- Gas Pressure:: 1.0Pa
- RF Etching Power:: 500W
- Gas Flow Rate:: 100cc/min

It should be noted that the base 11 used to manufacture the master 1 is not limited to a glass material, and it is possible to use various bases, such as a metal base, a semiconductor base, or a ceramic base. In this case, to obtain the prominent effects of the present invention described later, the etching rate of the base 11 is preferably lower (as one example, an etching rate of 60nm/min or less, or more preferably, an etching rate of 30nm/min or less) than the etching rate of the light absorbing layer 12. The light absorbing layer 12 corresponds to an etched layer as an etched body for the present invention, and as one example, a resin material with an etching rate of around 300nm/min after hardening is used to form a layer with a thickness T (see FIG. 2) of around 150nm. It should be noted that the etching rate of the light absorbing layer 12 is not limited to the value given above, and may be changed as appropriate in accordance with the etching rate of the base 11 given earlier and the etching rate of a photoresist layer 13 (see FIG. 3) formed in a subsequent manufacturing process. More specifically, the selection ratio of the etching rate of the photoresist layer 13 to the etching rate of the light absorbing layer 12 is preferably 0.5 or above, with a selection ratio of 1.0 or above being even more preferable. In this case, the prominent effects of the present invention that are described later can be sufficiently obtained at higher selection ratios within a range of 1.5 to 3.0, inclusive. It should be noted that when the light absorbing layer 12 is formed of a material with an excessively high etching rate, the light absorbing layer 12 will be etched in a short time, so that time management of the etching process becomes difficult, resulting in a tendency for it to become difficult to form the concave parts 2, 2 ..., with the desired depth. On the other hand, when the light absorbing layer 12 is formed of a material with a low etching rate, even if there is a certain degree of error in the etching time, the amount etched due to this time error will be low, so that time management of the etching process becomes easy. As a result, even with a high selection ratio in excess of 3.0, it is still possible to form concave parts 2, 2 ..., with the desired depth.

In addition, the thickness of the light absorbing layer 12 is subject to no particular limitations, but the light absorbing layer 12 is formed with a thickness that enables the exposure laser beam L to be sufficiently absorbed during exposure of the photoresist layer 13. More specifically, the light absorbing layer 12 is formed of a material with an absorption coefficient k for the laser beam L of 0.01 or above and preferably 0.1 or above and is preferably formed with a thickness for sufficiently absorbing the exposure laser beam L. In this case, if the light absorbing layer 12 is insufficiently thick, there is a tendency for the laser beam L to be insufficiently absorbed, resulting in multiple exposure of the photoresist layer 13 and the latent image being ruined. On the other hand, even if the light absorbing layer 12 is formed with a thickness of over 300nm, there is no prominent increase in light absorption for the laser beam L, and the material for forming the light absorbing layer 12 is unnecessarily consumed. Also, when the light absorbing layer 12 is formed with a thickness of over 300nm, heat is excessively stored in the light absorbing layer 12 during exposure to the laser beam L, which causes thermal decomposition of the photoresist layer 13 and tends to result in it becoming difficult to stably expose the photoresist layer 13. Accordingly, the thickness of the light absorbing layer 12 is preferably set in a range of 1nm to 300nm, inclusive, with a range of 10nm to 200nm being more preferable. In this case, the degree of thermal decomposition in the photoresist layer 13 due to the storage of heat in the light absorbing layer 12 mentioned above changes in accordance with the emission power of the exposure laser beam L. This means that when exposure is carried out using a laser beam L of relatively low power, the thickness of the light absorbing layer 12 can be set in a range of 300nm to 500nm, inclusive.

To facilitate the formation process (etching process) of the concave parts 2, 2, ..., it is preferable to make the thickness T of the light absorbing layer 12 equal to the depth D of the concave parts 2 formed later with the condition that the etching rate of the light absorbing layer 12 is higher than the etching rate of the base 11 as mentioned above. By doing so, as described later, by merely dry etching until the surface of the base 11 is exposed, it is possible to form the concave parts 2, 2, ... of the desired depth D (that is, the thickness T of the light absorbing layer 12). The light absorbing layer 12 includes an organic compound (this corresponds to the beam absorbing material for the present invention and is also referred to hereinafter as the "light absorbent") with a light absorbing characteristic for the wavelength of the laser beam L emitted during exposure, and for example, an auxiliary photoinitiator, a dye, or a mixture of an auxiliary photoinitiator and a dye is used. In this case, the auxiliary photoinitiator is composed of an organic compound that absorbs light such as UV rays. In this embodiment of the present invention, 4,4'-bis (diethylamino) benzophenone (hereinafter also referred to as a "benzophenone compound") is used as one example of a light absorbent, and a mixture of the benzophenone compound and a melamine resin (thermal hardening resin), in which melanine and formalin and the like are combined, is used as the resin material in the present invention.

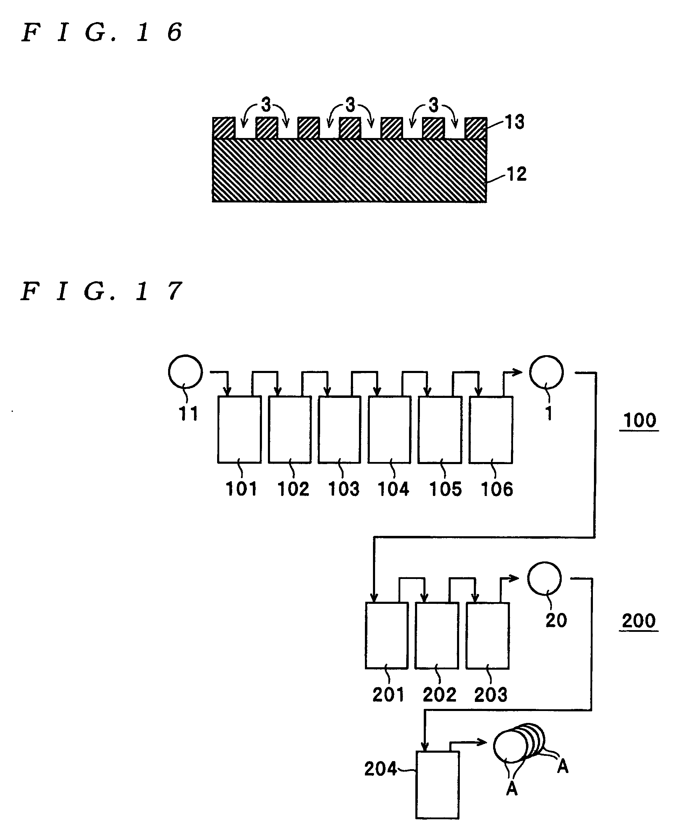

Next, a manufacturing apparatus (hereinafter also referred to as the "master manufacturing apparatus") 100 for an information medium master according to the present invention will be described with reference to FIG. 17.

This master manufacturing apparatus 100 includes a light absorbing layer forming device 101, a resist layer forming device 102, an exposing device 103, a developing device 104, an etching device 105, and a resist removing device 106, and is constructed so as to be capable of manufacturing the master 1 using the base 11.

When fabricating the master 1, first the benzophenone compound is dissolved in the melanine resin to fabricate the applied liquid (hereinafter also referred to as the "resin R1") for forming the light absorbing layer 12. The fabricated resin R1 is stored inside the light absorbing layer forming device 101. At this time, it is possible to use a UV-hardening resin in place of the melamine resin. Also, to improve adhesion with the photoresist layer 13 that will be formed later, it is possible to fabricate the applied liquid by adding various types of additives, such as an adhesive auxiliary, a light absorbent, and a surface active agent. In addition, in place of the mixture of the benzophenone compound and the melamine resin, it is possible to use a mixture in which various kinds of light absorbent can be mixed with a UV-hardening resin, light-curing resin, or the like.

In the manufacturing device 100, first, the light absorbing layer forming device 101 forms a coupling agent layer (not illustrated) on the base 11 whose surface has been polished flat and, as shown in FIG. 2, applies the resin R1 on the base 11 in the form of a layer by spin coating. Next, the light absorbing layer forming device 101 hardens the resin R1 by subjecting the base 11 in this state to a heating process at a temperature of 150°C to 250°C, for example, at around 200°C. It should be noted that when UV-hardening resin is used during the fabrication of the applied liquid, the light absorbing layer forming device 101 hardens the applied film by irradiating the applied liquid after application with UV rays. By doing so, the light absorbing layer 12 is formed on the base 11.

Next, after spin coating a photoresist on the light absorbing layer 12 at a thickness of around 30nm, the resist layer forming device 102 evaporates the remaining solvent by drying. By doing so, as shown in FIG. 3, the photoresist layer 13 is formed on the light absorbing layer 12. This photoresist layer 13 is a layer that functions as a mask when the light absorbing layer 12 is subsequently dry etched, and is formed using a photosensitive material whose etching rate after drying is around 200nm/min. Accordingly, the selection ratio of the etching rate of the photoresist layer 13 to the etching rate of the resin R1 mentioned above (in this case, around 300nm/min) is 1.5. It should be noted that in the embodiment of the present invention, a photoresist (DVR100 manufactured by ZEON CORPORATION of Japan) is used as one example of a photosensitive material.

Next, the exposing device 103 (a so-called "cutting machine") emits a patterning laser beam L (an exposing beam, for example, a laser beam with a spot diameter 0.32µm when sliced with a peak intensity (1/e²)) with a wavelength (λ) 351nm via a lens with a numerical aperture (NA) of 0.90, for example, onto parts at which the concave parts 2, 2 ... (parts at which the guide grooves 30a of the disc base 30 will be formed) should be formed. By doing so, a spiral latent image with a formation pitch of around 0.30µm and width of around 0.15µm, for example, is formed in the photoresist layer 13. In this case, since the light absorbing layer 12 is formed between the base 11 and the photoresist layer 13, the majority of the laser beam L that has been emitted from the exposing device 103 and passed through the photoresist layer 13 (and formed the latent image) is absorbed by the light absorbing layer 12 and so does not reach the base 11. On the other hand, the small amount of the laser beam L that has not been absorbed by the light absorbing layer 12 and has reached and been reflected by the base 11 is absorbed by the light absorbing layer 12 without reaching the photoresist layer 13. Accordingly, reflection by the base 11 is inhibited and multiple exposure of the photoresist layer 13 is prevented, so that a sharp latent image is formed with a narrow (slim) pitch. Next, the developing device 104 develops the photoresist layer 13 in this state, as shown in FIG. 4, to remove the parts irradiated with the laser beam L and thereby form concave parts 3, 3, .... In this case, the light absorbing layer 12 is a non-photosensitive material and does not dissolve in a developer, so that the surface of the light absorbing layer 12 forms base surfaces 3a of the concave parts 3. Since the latent image formed by irradiation with the laser beam L is extremely sharp, the concave parts 3, 3, ... formed by this developing will definitely be sharp.

Next, the etching device 105 uses the photoresist layer 13, in which the concave parts 3, 3, ... have been formed, as a mask and carries out reactive ion etching using CF₄, C₂F₆, C₃F₈, CHF₃, or a mixture of these gases, or a gas produced by adding an additive gas (O₂, Ar, H₂) to such gas as the etching gas, thereby forming the concave parts 2, 2, ... in the light absorbing layer 12 as shown in FIG. 5. At this time, since the concave parts 3, 3, ... formed in the photoresist layer 13 are extremely sharp as mentioned above, it is possible to form extremely sharp concave parts 2, 2, ... by using the photoresist layer 13 in which these concave parts 3, 3, ... have been formed as a mask. Also, by setting the thickness T of the light absorbing layer 12 in accordance with the depth D of the concave parts 2 and using a silica glass plate with a much lower etching rate (in this case, around 60nm/min) than the etching rate of the light absorbing layer 12, during etching, by etching until the surface of the base 11 is exposed from the light absorbing layer 12 (that is, etching so that the base surfaces 2a of the concave parts 2 are the surface of the base 11), it is possible to form concave parts 2, 2 ... with the desired depth D. In this case, even if the time of the etching process is slightly too long, the base 11 with the low etching rate will not be significantly etched, so that the formation of concave parts 2 that are excessively deeper than the depth D is avoided. Accordingly, time management of the etching process is extremely easy.

Also, unlike a conventional manufacturing method for an optical recording medium master where concave parts are formed in a glass master (a composite silica master), by carrying out dry etching with a resin material (the light absorbing layer 12) with a relatively high etching rate as the etched body, it is possible to form the concave parts 2, 2, ... with the desired depth D in a short time. In this case, the etching rate of the photoresist layer 13 used as the mask is lower than the light absorbing layer 12, so that as shown in FIG. 5, even when the formation of the concave parts 2, 2 with the desired depth is complete, the photoresist layer 13 remains on the light absorbing layer 12 as a mask. This means that it is possible to effectively avoid problems such as rounding of groove shapes of the concave parts 2, 2, ... or formation thereof with a reduced depth D due to the photoresist layer 13 used as the mask disappearing before the formation of the concave parts 2, 2, ... has been completed. Next, the resist removing device 106 soaks the multilayer structure composed of the base 11, the light absorbing layer 12, and the photoresist layer 13 for which etching is complete in resist remover to remove the photoresist layer 13 that remains on the light absorbing layer 12. By doing so, the master 1 shown in FIG. 1 is fabricated.

Next, a manufacturing method for a stamper 20 that corresponds to an optical recording medium stamper for the present invention will be described with reference to the drawings.

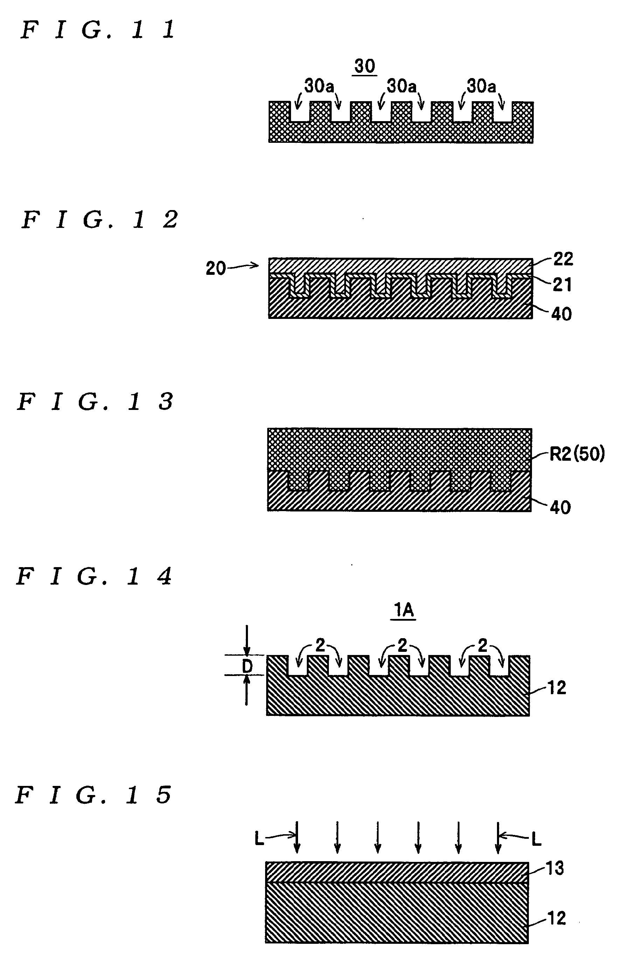

The stamper 20 shown in FIG. 6 is a mold for injection molding the disc base 30 (see FIG. 11) for an optical recording medium and for manufacturing the mother disc 40 (see FIG. 12), and is manufactured using the master 1 manufactured according to the manufacturing method described above. This stamper 20 is composed with an electro nickel layer 22 laminated on an electroless nickel layer 21 (conductive layer), and is formed in the overall shape of a flat plate. Convex parts 20a for forming a protrusion/depression pattern in an upper surface of the disc base 30 are formed in spirals in a lower surface of the stamper 20. In this case, the pitch of the adjacent convex parts 20a, 20a (the formation pitch of the convex parts 20a) is set in accordance with the formation pitch of the guide grooves 30a of the disc base 30, for example at 0.32µm.

Next, the manufacturing apparatus (hereinafter also referred to as the "stamper manufacturing apparatus") 200 for an information medium master according to the present invention will be described with reference to FIG. 17.

The stamper manufacturing apparatus 200 includes a conductive layer applying device 201, a stamper forming material forming device 202, and a removing device 203, and is constructed so as to be capable of manufacturing the stamper 20 using the master 1.

When manufacturing the stamper 20, as shown in FIG. 7, the conductive layer applying device 201 first forms the electroless nickel layer 21 (conductive layer) composed of the nickel as the metal material by electroless plating (deposition), for example, along the protrusion/depression pattern of the master 1. By doing so, the surface (the surface of the base 11 and surfaces of the light absorbing layer 12) of the master 1 is made conductive. In this case, the material for forming the layer (conductive layer) that makes the surface of the master 1 conductive is not limited to nickel, and it is possible to use various types of metal material. The method for forming the conductive layer is not limited to electroless plating and various types of metal material layer (for example, a nickel layer) can be formed by various types of coating method, such as vapor deposition or sputtering. Next, as shown in FIG. 8, the stamper forming material forming device 202 forms (laminates) the electro nickel layer 22 on the electroless nickel layer 21 by carrying out an electroplating process (deposition) using the electroless nickel layer 21 as an electrode. In this case, the electro nickel layer 22 formed by the stamper forming material forming device 202 is the "stamper forming material" for the present invention and the multilayer structure (also referred to as the "stamper multilayer structure") composed of the electroless nickel layer 21 and the electro nickel layer 22 will construct the stamper 20.

Next, as shown in FIG. 9, the base 11 is separated from the master 1 on which the stamper multilayer structure is stacked by hand or by a dedicated separating device (not shown), before the removing device 203 removes the light absorbing layer 12 from the multilayer structure composed of the master 1 from which the base 11 has been separated and the stamper multilayer structure. More specifically, the removing device 203 carries out O₂ plasma ashing on the surface from which the base 11 has been separated to remove the light absorbing layer 12 stuck to the stamper multilayer structure. By doing so, as shown in FIG. 6, the concave parts 2, 2, ... of the master 1 are transferred to a metal material (the electroless nickel layer 21 and the electro nickel layer 22) to form the convex parts 20a, 20a, ..., and as a result the stamper 20 is fabricated. In this case, the protrusion/depression pattern is formed in the stamper 20 by transferring the protrusion/depression pattern of the master 1 to the metal material with the master 1 described above as a base. Accordingly, by sharply forming the protrusion/depression pattern of the master 1 used as the base as described above, the protrusion/depression pattern transferred to the stamper 20 is also formed extremely sharply. This means that as described later, by using this stamper 20 to manufacture a disc base for an optical recording medium, a disc base for which proper tracking is possible can be formed.

Next, a manufacturing method for a disc base for an optical recording medium using the stamper 20 will be described with reference to the drawings.

When manufacturing an optical recording medium using the stamper 20, as one example, as shown in FIG. 10, resin R2 is introduced into a mold in which the stamper 20 has been set to injection mold the disc base 30. By doing so, as shown in FIG. 11, the convex parts 20a, 20a, ... of the stamper 20 are transferred to the resin R2 to form the guide grooves 30a, 30a, ..., thereby fabricating the disc base 30. In addition, when mass producing the disc base 30, as one example, as shown in FIG. 17, it is preferable to add a transfer device 204 to the stamper manufacturing apparatus 200 and thereby construct the stamper manufacturing apparatus 200 so as to be capable of fabricating a plurality of child stampers (one example of "the first stamper" for the present invention) A, A, ... using the transfer device 204. In this case, as shown in FIG. 12, the transfer device 204 first uses the stamper 20 as a master stamper and fabricates a mother disc 40 by transferring the protrusion/depression pattern of the stamper 20 to a metal material, for example. Next, the transfer device 204 fabricates a plurality of child stampers A, A, ... by transferring the protrusion/depression pattern of the mother disc 40. When manufacturing the disc base 30, these child stampers A, A, ... are used. By doing so, it is possible to successively replace the child stamper A in use with a new child stamper A before it wears out, so that it is possible to mass produce the disc base 30.

In this case, depending on the application, it is also possible to use the mother disc 40 as a stamper (another example of "the first stamper" for the present invention). As shown in FIG. 13, the mother disc 40 is used as a stamper and the resin R2 is introduced into a mold in which this stamper has been set. By doing so, as shown in FIG. 13, a disc base 50 that has the reverse of the protrusion/depression pattern of the disc base 30 is injection molded. In this way, a manufacturing method for the disc base 50 that uses the mother disc 40 as the stamper can be effectively used when manufacturing disc bases for high-density optical recording media that have been investigated in recent years. A blue laser is used as the reproduction laser beam and the recording laser beam of high-density optical recording media, so that it is necessary to bring the pickup close to the recording layer during recording and reproduction. Accordingly, since the incident direction of the laser beam is reversed compared to conventional optical recording media and irradiation with the laser beam is carried out from the light transmitting layer side that is thinner than the disc base, it is necessary to manufacture the disc base with a protrusion/depression pattern that is the reverse of the pattern on a normal disc base. This means that by using a mother disc 40 with a protrusion/depression pattern that is the reverse of the stamper 20 as the stamper, it is possible to easily manufacture a disc base for a high-density optical recording medium.

In this way, with the manufacturing method and the master manufacturing apparatus 100 for the master 1 according to the embodiment of the present invention, the light absorbing layer 12 is formed of a resin material (resin R1) such that the selection ratio of the etching rate (200nm/s) of the photoresist layer 13 to the etching rate (300nm/s) of the light absorbing layer 12 is in a range of 1.0 to 3.0, inclusive (in this example, 1.5), so that even when the formation of the concave parts 2, 2, ... with the desired depth D has been completed, the photoresist layer 13 as a mask will still remain, so that problems caused by the photoresist layer 13 used as a mask disappearing before the formation of the concave parts 2, 2, ... is complete, such as the groove shapes of the concave parts 2, 2, ... becoming rounded or the depth D of the concave parts 2, 2, ... being too shallow, can be effectively avoided. Accordingly, it is possible to form a stamper 20 that can manufacture disc bases for which proper tracking is possible. In this case, by using a resin material (the light absorbing layer 12) that has a higher etching rate than a synthetic silica master as the etched body, it is possible to form the concave parts 2, 2 with the desired depth D in a short time, and as a result the manufacturing cost of the master 1 can be considerably reduced. Also, unlike the method that etches a lower layer made of Cr as part of the conventional manufacturing method, it is not necessary to use a chlorine-based etching gas, so that the master 1 can be manufactured safely and easily.

Also, with this manufacturing method and master manufacturing apparatus 100 for the master 1, the light absorbing layer 12 is formed with a mixture including melanine resin and 4,4'-bis (diethylamino) benzophenone as the resin material, so that the majority of the laser beam L that has passed through the photoresist layer 13 (and formed the latent image) during exposure of the photoresist layer 13 is absorbed by the light absorbing layer 12 without reaching the base 11, and the tiny proportion of the laser beam L that has not been absorbed and has reached and been reflected by the base 11 is absorbed by the light absorbing layer 12 without reaching the photoresist layer 13, so that multiple exposure of the photoresist layer 13 is effectively prevented and, as a result, it is possible to form a sharp latent image (the concave parts 3, 3, ...) with a narrow pitch in the photoresist layer 13. Accordingly, by dry etching with the photoresist layer 13 being used as a mask, it is possible to sharply form the concave parts 2, 2, ... of the master 1. Also, by manufacturing the disc base 30 using the stamper 20 onto which the protrusion/depression pattern of the master 1 has been transferred, it is possible to form guide grooves, for which a favorable tracking error signal and the like can be obtained, in the disc base 30. In this case, with this manufacturing method and the master manufacturing apparatus 100, even if a latent image is formed with a narrower pitch than a spot diameter of the laser beam L, multiple exposure is avoided due to absorption by the light absorbing layer 12, so that a relatively sharp latent image is formed. Accordingly, by manufacturing the disc base 30 using the stamper 20 manufactured with the master 1 as a base, it is possible to considerably improve the recording density of data.

In addition, according to the manufacturing method and the master manufacturing apparatus 100 for the master 1, the light absorbing layer 12 is formed by spin coating the resin R1 (resin material) on the base 11 as a support member, so that an etched body (the light absorbing layer 12) of the desired thickness can be formed relatively easily. Also, unlike the conventional manufacturing method that has a lower layer made of Cr, for example, as an etched body, it is possible to dispense with an expensive large-scale vacuum coating apparatus, so that the manufacturing cost of the master 1 (information medium master) can be considerably reduced. Also, according to this manufacturing method for the master 1, the base 11 is formed of a material (silica glass) with a lower etching rate than the light absorbing layer 12, the light absorbing layer 12 is formed with a thickness T for setting the depth D of the concave parts 2, 2, ... to be formed, and during dry etching, the concave parts 2, 2, ... are formed by exposing parts of the base 11 from the light absorbing layer 12, so that during etching, it is possible to easily form the concave parts 2, 2, ... of the desired depth D by merely etching until the surface of the base 11 is exposed from the light absorbing layer 12. In this case, even if the etching process is carried out slightly too long, the base 11 with the low etching rate will not be significantly etched, so that the formation of concave parts 2 that are excessively deeper than the depth D is avoided and as a result, time management of the etching process becomes extremely easy.

With the manufacturing method and stamper manufacturing apparatus 200 for the stamper 20 according to the embodiment of the present invention, the stamper 20 is manufactured by transferring the protrusion/depression pattern of the master 1 to a stamper forming material (the electroless nickel layer 21 and the electro nickel layer 22), and since it is possible to form the protrusion/depression pattern of the master 1 extremely sharply, the protrusion/depression pattern transferred to the stamper 20 can also be formed with an extremely sharp form. Accordingly, by manufacturing a disc base for an optical recording medium using this stamper 20, it is possible to form a disc base that makes proper tracking possible. In addition, according to the manufacturing method for the stamper 20, the light absorbing layer 12 is removed by carrying out O₂ plasma ashing, so that it is possible to reliably and easily remove the light absorbing layer 12 to which the stamper 20 is stuck.

In addition, according to the manufacturing method and the stamper manufacturing apparatus 200 for the mother disc 40 (the "first stamper" for the present invention) according to the embodiment of the present invention, the stamper 20, in which the convex parts 20a, 20a, ... are sharply formed with a narrow pitch, is used as a master stamper and the mother disc 40 is manufactured by transferring the protrusion/depression pattern of this stamper 20, so that the respective concave parts (concave parts formed in the mother disc 40 by the convex parts 20a, 20a, ...) can be formed sharply. Accordingly, by manufacturing a plurality of stampers (child stampers) using this mother disc 40, it is possible to successively replace a stamper in use with a new stamper, so that it is possible to mass produce disc bases 30 with guide grooves with sharp groove shapes. Also, by manufacturing the disc base 50 using the mother disc 40, it is possible to form guide grooves, for which a favorable tracking error signal and the like can be obtained, in the disc base 50. As a result, it is possible to considerably improve the recording density of the recording data.

It should be noted that the present invention is not limited to the embodiment described above and can be modified as appropriate. For example, in the embodiment of the present invention, a manufacturing method for a master including a manufacturing process for the light absorbing layer 12 as the etched body and the master manufacturing apparatus 100 including the light absorbing layer forming device 101 have been described using examples, but by using a base 11 on which the light absorbing layer 12 has been formed in advance, it is possible to manufacture a master without carrying out the manufacturing process for the light absorbing layer 12 and to construct the master manufacturing apparatus 100 without the light absorbing layer forming device 101. Also, although a master 1 in which the light absorbing layer 12 is formed on a silica glass plate (the base 11) used as a base (support member) has been described in the above embodiment of the present invention as an example of the present invention, the manufacturing method for an optical recording medium master according to the present invention is not limited to this, and like a master 1A shown in FIG. 14, for example, it is also possible to manufacture an optical recording medium master by forming concave parts in an etched body made of only the light absorbing layer 12 (a resin material). When manufacturing this master 1A, first the resin R1 (the "resin material" for the present invention) used when manufacturing the master 1, for example, is used to form a light absorbing layer 12 (resin plate) in the form of a flat plate, and the photoresist layer 13 is then formed on this light absorbing layer 12 as shown in FIG. 15. Next, by irradiating the photoresist layer 13 with the laser beam L and then developing the photoresist layer 13, the concave parts 3, 3, ... are formed in the photoresist layer 13 as shown in FIG. 16. Next, after carrying out dry etching for a predetermined time with the photoresist layer 13 as a mask, the photoresist layer 13 is removed to form the concave parts 2, 2, ... with the depth D in the light absorbing layer 12, as shown in FIG. 14. By doing so, the master 1A is completed. When this master 1A is used to manufacture the stamper 20, the time required to remove the light absorbing layer 12 when carrying out O₂ plasma ashing in the embodiment described above becomes slightly longer, but it is possible to dispense with the step of separating the base 11 in the manufacturing method for the stamper 20.

Also, the protrusion/depression pattern (the protrusion/depression pattern formed in the master 1 or the protrusion/depression pattern transferred to the stamper 20 and the like) for the present invention is not limited to a spiral protrusion/depression pattern given as an example in the above embodiment of the present invention, and a protrusion/depression pattern in the form of concentric circles or a protrusion/depression pattern in some other shape may be used. In addition, the present invention is not limited to manufacturing a stamper for forming guide grooves and to manufacturing a master for manufacturing such stamper, and can also be effectively applied to the formation of a stamper and a master for forming information pits, for example. Also, the etched body layer for the present invention is not limited to the light absorbing layer 12 including a beam absorbing material that absorbs the exposing beam (the laser beam L), and it is possible to form the etched body from a beam reflection preventing material that prevents reflection of the exposing beam. Also, although an optical recording medium has been described as an example of an information medium, it should be obvious that the present invention can be applied to a magnetic disc (a discrete medium or the like).

### INDUSTRIAL APPLICABILITY

As described above, according to this manufacturing method for an information medium master, the etched body is formed of a resin material such that the selection ratio of the etching rate of the photoresist layer to an etching rate of the etched body is 0.5 or above, so that when the formation of the concave parts with the desired depth is complete, it is possible for the photoresist layer as a mask to remain. This means that it is possible to effectively avoid problems, such as the groove shapes of the concave parts becoming rounded or the depth of the concave parts being too shallow, that are caused by the photoresist layer disappearing before the formation of the concave parts is complete; and a manufacturing method for an information medium master in which a sharp protrusion/depression pattern is formed is realized.

## Claims

1. A information medium master manufacturing method that manufactures an information medium master in which a protrusion/depression pattern is formed by forming a photoresist layer above an etched body, irradiating the photoresist layer with an exposing beam to form a latent image, then developing the photoresist layer to expose part of the etched body from the photoresist layer, forming concave parts in the etched body by dry etching the etched body with the photoresist layer as a mask, and removing the photoresist layer remaining above the etched body,
wherein an etched body formed of a resin material such that a selection ratio of an etching rate of the photoresist layer to an etching rate of the etched body is 0.5 or above is used as the etched body.

2. An information medium master manufacturing method according to Claim 1,
wherein an etched body formed of a resin material such that the selection ratio is 1.0 to 3.0, inclusive is used as the etched body.

3. An information medium master manufacturing method according to Claim 1,
wherein an etched body formed of a resin including a beam absorbing material that absorbs the exposing beam or a beam reflection preventing material that prevents reflection of the exposing beam is used as the etched body.

4. An information medium master manufacturing method according to Claim 2,
wherein an etched body formed of a resin including a beam absorbing material that absorbs the exposing beam or a beam reflection preventing material that prevents reflection of the exposing beam is used as the etched body.

5. An information medium master manufacturing method according to Claim 3,
wherein the resin material is a mixture including a melanine resin and 4,4'-bis (diethylamino) benzophenone as the beam absorbing material.

6. An information medium master manufacturing method according to Claim 4,
wherein the resin material is a mixture including a melanine resin and 4,4'-bis (diethylamino) benzophenone as the beam absorbing material.

7. An information medium master manufacturing method according to Claim 1,
wherein the etched body is formed in a layer above a base and the concave parts are formed in the etched body.

8. An information medium master manufacturing method according to Claim 7,
wherein the resin material is spin coated above the base to form the etched body.

9. An information medium master manufacturing method according to Claim 7,
wherein a base formed of a material with a lower etching rate than the etched body is used, the etched body is formed with a thickness set at the depth of the concave parts to be formed, and the protrusion/depression pattern is formed by forming the concave parts by exposing part of the base from the etched body during dry etching.

10. An information medium stamper manufacturing method that manufactures an information medium stamper using an information medium master manufactured according to the information medium master manufacturing method according to any of Claims 1 to 6, the information medium stamper manufacturing method comprising steps of:
forming a stamper forming material on a surface of the information medium master on which the protrusion/depression pattern is formed; and
removing the etched body as the information medium master from the stamper forming material.

11. An information medium stamper manufacturing method that manufactures an information medium stamper using an information medium master manufactured according to the information medium master manufacturing method according to any of Claims 7 to 9, the information medium stamper manufacturing method comprising steps of:
forming a stamper forming material on a surface of the information medium master on which the protrusion/depression pattern is formed; and
removing the etched body from the stamper forming material after separating the base from the information medium master.

12. An information medium stamper manufacturing method according to Claim 10,
wherein the etched body is removed by carrying out O₂ plasma ashing.

13. An information medium stamper manufacturing method according to Claim 11,
wherein the etched body is removed by carrying out O₂ plasma ashing.

14. An information medium stamper manufacturing method according to Claim 10,
wherein the information medium stamper is manufactured by depositing a metal material as the stamper forming material on the information medium master.

15. An information medium stamper manufacturing method according to Claim 11,
wherein the information medium stamper is manufactured by depositing a metal material as the stamper forming material on the information medium master.

16. An information medium stamper manufacturing method that manufactures a first stamper for transferring a protrusion/depression pattern onto an information medium by using an information medium stamper manufactured according to the information medium stamper manufacturing method of Claim 10 as a master stamper and transferring the protrusion/depression pattern of the master stamper.

17. An information medium stamper manufacturing method that manufactures a first stamper for transferring a protrusion/depression pattern onto an information medium by using an information medium stamper manufactured according to the information medium stamper manufacturing method of Claim 11 as a master stamper and transferring the protrusion/depression pattern of the master stamper.

18. An information medium master manufacturing apparatus that manufactures an information medium master in which a protrusion/depression pattern is formed, comprising:
a resist layer forming device that forms a photoresist layer above an etched body;
an exposing device that emits an exposing beam onto the photoresist layer to form a latent image;
a developing device that exposes part of the etched body by developing the photoresist layer in which the latent image is formed;
an etching device that carries out dry etching on the etched body using the developed photoresist layer as a mask to form concave parts in the etched body; and
a resist removing device that removes the photoresist layer remaining on the etched body,
wherein the resist layer forming device uses an etched body formed of a resin material such that a selection ratio of an etching rate of the photoresist layer to an etching rate of the etched body is 0.5 or above as the etched body.

19. An information medium master manufacturing apparatus according to Claim 18,
wherein the resist layer forming device uses an etched body formed of a resin material such that the selection ratio is 1.0 to 3.0, inclusive as the etched body.

20. An information medium master manufacturing apparatus according to Claim 18,
wherein the resist layer forming device uses an etched body formed of a resin including a beam absorbing material that absorbs the exposing beam or a beam reflection preventing material that prevents reflection of the exposing beam as the etched body.

21. An information medium master manufacturing apparatus according to Claim 20,
wherein the resist layer forming device uses an etched body formed of a mixture, which includes a melanine resin and 4,4'-bis (diethylamino) benzophenone as the beam absorbing material, as the etched body.

22. An information medium master manufacturing apparatus according to Claim 18,
further comprising an etched body forming device that forms the etched body of the resin material in a layer above a base.

23. An information medium master manufacturing apparatus according to Claim 22,
wherein the etched body forming device uses a base formed of a material with a lower etching rate than the etched body as the base and forms the etched body with a thickness set at the depth of the concave parts to be formed, and
the etching device forms the protrusion/depression pattern by forming the concave parts by exposing part of the base from the etched body during dry etching.

24. An information medium stamper manufacturing apparatus that manufactures an information medium stamper using an information medium master manufactured by an information medium master manufacturing apparatus according to any of Claims 18 to 21,
the information medium stamper manufacturing apparatus comprising:
a stamper forming material forming device that forms a stamper forming material on a surface of the information medium master in which the protrusion/depression pattern is formed; and
a removing device that removes the etched body as the information medium master from the stamper forming material.

25. An information medium stamper manufacturing apparatus that manufactures an information medium stamper using an information medium master manufactured by an information medium master manufacturing apparatus according to either Claim 22 or Claim 23,
the information medium stamper manufacturing apparatus comprising:
a stamper forming material forming device that forms a stamper forming material on a surface of the information medium master in which the protrusion/depression pattern is formed; and
a removing device that removes the etched body from a multilayer structure composed of the information medium master, from which the base has been separated, and the stamper forming material.
